# EUROPÄISCHE PATENTANMELDUNG

(11) **EP 3 991 919 A1**
(43) Veröffentlichungstag der Anmeldung: **04.05.2022**
(21) Anmeldenummer: 20204287.5
(22) Anmeldetag: 28.10.2020
(51) Int. Cl.: B25F 5/02, F16C 33/72

(54) **MOBILE WERKZEUGMASCHINE MIT EINEM WASSERHALTIGEN SCHMIERMITTEL SOWIE VERWENDUNG DER MOBILEN WERKZEUGMASCHINE**

(71) Anmelder: Hilti Aktiengesellschaft, 9494 Schaan (LI)
(72) Erfinder: Kondratiuk, Jens, 9470 Buchs (CH); Hummel, Daniel, 9470 Buchs (CH)
(74) Vertreter: Hilti Aktiengesellschaft Corporate Intellectual Property

(57) **Zusammenfassung**

Die Erfindung betrifft eine mobile Werkzeugmaschine, beispielsweise eine Handwerkzeugmaschine (10), mit einer Antriebseinheit (20). Sie ist dadurch gekennzeichnet, dass die Antriebseinheit (20) ein wasserhaltiges Schmiermittel (26) aufweist und/oder dass die Antriebseinheit (20) zum Betrieb mit dem wasserhaltigen Schmiermittel (26) eingerichtet ist, wobei das wasserhaltige Schmiermittel (26) wenigstens 5 Prozent, vorzugsweise wenigstens 15 Prozent, Wasser aufweist. Die mobile Werkzeugmaschine weist eine besonders hohe Energieeffizienz auf.

## Beschreibung

Die vorliegende Erfindung betrifft eine mobile Werkzeugmaschine, beispielsweise eine Handwerkzeugmaschine, mit einer Antriebseinheit.

Relativ zueinander bewegte Teile an Handwerkzeugmaschinen und allgemein an mobilen Werkzeugmaschinen, insbesondere bewegte Teile der Antriebseinheit, unterliegen häufig einer starken Reibung. Die Reibung führt zu erheblichen Verlusten an Arbeitsleistung der Handwerkzeugmaschine. Auch kann es lokal oder über die gesamte Handwerkzeugmaschine hinweg zu beträchtlichen Temperaturerhöhungen kommen. Diese führen häufig wiederum zu einem beschleunigten Verschleiß. Auch stellen diese Temperaturerhöhungen ein Sicherheitsrisiko für einen Benutzer der Handwerkzeugmaschine dar.

Wünschenswert und damit Aufgabe der vorliegenden Erfindung ist es daher, eine gattungsgemäße mobile Werkzeugmaschine besonders energiesparend auszubilden.

Überraschenderweise wird die Aufgabe gelöst durch eine mobile Werkzeugmaschine, beispielweise eine Handwerkzeugmaschine, mit einer Antriebseinheit, wobei die Antriebseinheit ein wasserhaltiges Schmiermittel aufweist und/oder wobei die Antriebseinheit zum Betrieb mit einem wasserhaltigen Schmiermittel eingerichtet ist, wobei das wasserhaltige Schmiermittel wenigstens 5 Prozent, vorzugsweise wenigstens 15 Prozent, Wasser aufweist. Bei besonders bevorzugten Ausführungsformen der Erfindung weist das Schmiermittel einen Wassergehalt zwischen 25 und 40 Prozent, insbesondere von 28 oder von 38 Prozent, auf.

Die mobile Werkzeugmaschine kann eine Handwerkzeugmaschine sein oder eine solche umfassen. Die mobile Werkzeugmaschine kann auch ein Bauroboter, insbesondere eingerichtet für Arbeiten im Hoch- und/oder Tiefbau, sein oder einen solche umfassen.

Unter der Angabe eines Prozentanteils kann bevorzugt ein auf das Gewicht bezogener Prozentanteil, also ein Gewichtsprozentanteil, verstanden werden.

Der Erfindung liegt dabei die überraschende Erkenntnis zugrunde, dass ein im vorangehend genannten Umfang Wasser-haltiges Schmiermittel zu einer besonders ausgeprägten Reibungsreduktion zwischen relativ zueinander bewegten Teilen führen kann. Somit lässt sich die Energieeffizienz erheblich steigern.

Durch die Reibungsminderung lässt sich auch Verschleiß in besonders ausgeprägtem Maße reduzieren; auch lassen sich Temperaturen an und/oder in der mobilen Werkzeugmaschine reduzieren. Schmiermittelkühlungsvorrichtungen können kleiner dimensioniert werden oder ganz entfallen.

Dies steht bisherigen Auffassungen in der Fachwelt entgegen, die bei Vermengung eines wasserfreien Schmiermittels einer mobilen Werkzeugmaschine mit Wasser zum Austausch des Schmiermittels geraten haben.

Die mobile Werkzeugmaschine kann als elektrische Handwerkzeugmaschine ausgebildet sein. Sie kann auch als Bauroboter, insbesondere eingerichtet für Arbeiten im Hoch- und/oder Tiefbau, eingerichtet sein.

Sie kann als Bohrmaschine, Meißelmaschine, Bohrhammermaschine, als Direktsetzgerät oder dergleichen ausgebildet und/oder einsetzbar sein. Die mobile Werkzeugmaschine kann ein Hochleistungsgerät, insbesondere mit einer aufgenommenen Leistung von mindestens 1 kW, besonders bevorzugt von mindestens 2 kW sein. Insbesondere kann die mobile Werkzeugmaschine zum Betrieb bei Leistungen vorgesehen sein, die im Bereich einer maximal entnehmbaren Leistung einer Stromquelle, insbesondere eines Stromnetzes oder eines Stromspeichers, liegen.

Durch die erzielte Reibungsminderung lässt sich somit im Vergleich zu bisherigen mobilen Werkzeugmaschinen derselben Leistungsklasse, insbesondere im Bereich der maximal entnehmbaren Leistung der Stromquelle, eine bemerkenswerte Steigerung der Arbeitsleistung der mobile Werkzeugmaschine erzielen.

Das wasserhaltige Schmiermittel kann bei einer üblichen Betriebstemperatur der mobilen Werkzeugmaschine fluid, insbesondere flüssig sein.

Der Wassergehalt des Schmiermittels kann höchstens 70 Prozent betragen.

Die Antriebseinheit kann wenigstens ein Getriebe aufweisen. Das Schmiermittel kann eingerichtet sein, zumindest einen Teil der Antriebseinheit, insbesondere das Getriebe oder zumindest einen Teil des Getriebes, zu schmieren.

Besonders bevorzugt kann die mobile Werkzeugmaschine kabellos betreibbar sein. Bei kabellosen mobilen Werkzeugmaschinen ist üblicherweise die zur Verfügung stehende Gesamtenergie begrenzt. Die Arbeitsleistungen von kabellosen mobilen Werkzeugmaschinen sind zudem oftmals im Vergleich zu kabelgebundenen Geräten reduziert. Durch die erfindungsgemäß erzielte Reibungsminderung lassen sich Nutzungsdauern verlängern. Auch können die vormals reduzierten Arbeitsleistungen gesteigert werden und beispielsweise auf das Niveau kabelgebundener Geräte gehoben werden, wobei gleichzeitig die flexible Anwendbarkeit kabelloser mobiler Werkzeugmaschinen erhalten bleiben kann.

Die mobile Werkzeugmaschine kann dazu einen wiederaufladbaren Stromspeicher aufweisen. Beispielsweise kann sie einen Akkumulator, insbesondere einen lithiumbasierten Akkumulator, aufweisen. Denkbar ist alternativ oder ergänzend auch, dass die mobile Werkzeugmaschine eine Brennstoffzelle aufweist.

Die mobile Werkzeugmaschine kann bevorzugt eingerichtet sein, ein diamanthaltiges Werkzeug anzutreiben. Das diamanthaltige Werkzeug kann beispielsweise eine Diamantbohrkrone, ein Diamantsägeblatt oder dergleichen sein.

Um einen Austritt des Schmiermittels aus der mobilen Werkzeugmaschine, insbesondere aus der Antriebseinheit, zu vermeiden, kann ein das wasserhaltige Schmiermittel enthaltender Innenbereich der Antriebseinheit gegen einen Außenbereich durch wenigstens eine Dichtgeometrie der mobilen Werkzeugmaschine abgedichtet sein. Die Dichtgeometrie kann insbesondere zur Abdichtung eines Grenzbereichs zwischen einem Gehäuse der mobilen Werkzeugmaschine und einer durch die Antriebseinheit angetriebenen Welle, beispielsweise einer Welle einer Werkzeugaufnahme der mobilen Werkzeugmaschine, ausgebildet sein.

Die Dichtgeometrie kann besonders bevorzugt eingerichtet sein, mit dem wasserhaltigen Schmiermittel verwendet zu werden. Dazu kann sie insbesondere auf durch den hohen Wassergehalt entstehende Anforderungen und Eigenschaften abgestimmt, beispielsweise Wasser- und/oder Wasserdampf-beständig, ausgebildet sein.

Der Einstufung eines Materials als Wasser-beständig und / oder Wasserdampf-beständig kann eine Prüfungsdurchführung nach Maßgabe der ISO 1817 zugrunde gelegt sein. Vorzugsweise kann sich die Einstufung auf eine Testung bei 60°C und / oder, insbesondere zur Testung der Wasserdampfbeständigkeit, bei 100°C, beziehen. Die Dauer der zugrunde gelegten Testung kann wenigstens 72 Stunden, besonders bevorzugt 168 Stunden und / oder 1008 Stunden, betragen. Ganz besonders ist eine zweifache Testung über 168 Stunden und über 1008 Stunden bevorzugt. Als Einstufungsmerkmal kann eine Änderung einer Zugfestigkeit und / oder einer Reißdehnung herangezogen sein. Insbesondere kann ein besonders taugliches Material bei einer Testung über 168 Stunden bei 60°C eine Verringerung der Zugfestigkeit um höchstens 14%, besonders bevorzugt um höchstens 10% und ganz besonders bevorzugt um höchstens 8%, aufweisen.

Bei einer besonders kostengünstigen Ausführung der mobilen Werkzeugmaschine kann die Dichtgeometrie ein Acryl-Nitril-Butadien (im Folgenden: NBR) aufweisen. Das NBR kann ein hydriertes NBR oder ein anderweitig modifiziertes NBR sein. Somit kann die Dichtgeometrie beständig gegen Wasser, Heißwasser und/oder Wasserdampf sein.

Durch unterschiedliche Maßnahmen lassen sich vorteilhafterweise der Wartungsaufwand für die Dichtgeometrie reduzieren und/oder die Lebensdauer der Dichtgeometrie verlängern und dadurch die Lebensdauer der mobilen Werkzeugmaschine steigern und/oder Betriebskosten senken.

Beispielsweise kann die Dichtgeometrie ein fluorhaltiges Material aufweisen. Insbesondere kann sie einen fluorhaltigen Kautschuk aufweisen. Die Dichtgeometrie kann aus einem besonders temperaturbeständigen Elastomer gebildet sein. Der fluorhaltige Kautschuk kann besonders bevorzugt ein Fluorkautschuk (im Folgenden: FKM) sein. Denkbar ist alternativ oder ergänzend auch, dass der fluorhaltige Kautschuk ein Perfluorkautschuk (FFKM) ist oder einen solchen aufweist. Allgemein kann es sich bei dem fluorhaltigen Kautschuk um ein fluoriertes Elastomer handeln. Denkbar ist auch, dass das fluorhaltige Material ein Polytetrafluorethylen (PTFE) ist. Die Dichtgeometrie kann auch unterschiedliche fluorhaltige Materialien, insbesondere unterschiedliche fluorhaltige Kautschuke und/oder ein PTFE, aufweisen.

Bei einer Klasse von Ausführungsformen der Erfindung weist die Dichtgeometrie eine zumindest bei Betrieb der Antriebseinheit berührungslose Dichtung auf, sodass sich ein Verschleiß der Dichtgeometrie erheblich reduzieren oder gar vermeiden lässt. Unter einer zumindest bei Betrieb der Antriebseinheit berührungslosen Dichtung kann eine Dichtung verstanden werden, die eingerichtet ist, zwischen zwei voneinander, in der Regel geringfügig, beabstandeten Elementen abzudichten, wobei die Dichtung zumindest bei Betrieb der Antriebseinheit von wenigstens einem der beiden Elemente beabstandet ist. Sie berührt somit dieses Element zumindest bei Betrieb der Antriebseinheit nicht.

Die Dichtgeometrie kann eine Schmiermittel-Labyrinthdichtung aufweisen. Dazu kann die Dichtgeometrie eine Engstelle aufweisen. Die Engstelle kann langgestreckt sein. Die Dichtgeometrie kann wenigstens ein Strömungshindernis aufweisen. Allgemein kann die Dichtgeometrie zur Erhöhung eines Strömungswiderstandes des Schmiermittels entlang einer Austrittsrichtung vom Innenbereich zum Außenbereich ausgebildet sein. Sie kann beispielsweise ein Tesla-Ventil oder zumindest eine Tesla-Ventil-artige Struktur aufweisen. Sie kann insbesondere ausgebildet sein, dass das Schmiermittel zumindest bei Betrieb der Antriebseinheit einen Gegendruck gegen weiteres, entlang der Austrittsrichtung anströmendes Schmiermittel aufbaut.

Denkbar ist auch, dass die Dichtgeometrie eingerichtet ist, zumindest bei Betrieb der Antriebseinheit ein Sperrfluid, insbesondere Sperrluft, aufzuweisen und/oder zu erzeugen. Das Sperrfluid, insbesondere die Sperrluft, kann dazu ein das Schmiermittel sperrendes Luftpolster bilden.

Die Dichtgeometrie kann auch ferromagnetisch dichtend ausgebildet sein.

Die Dichtgeometrie kann eingerichtet sein, bei Betrieb der Antriebseinheit im Schmiermittel wenigstens eine Wirbelströmung zu erzeugen. Durch die Wirbelströmung kann eine zusätzliche Dichtwirkung, insbesondere durch weitere Erhöhung des Strömungswiderstands entlang der Austrittsrichtung erzielt werden. Insbesondere, wenn die Dichtgeometrie einen Bereich zweier zylinderartiger oder zumindest im Wesentlichen zylinderartiger Teile umfasst, bei denen vorzugsweise eines der Teile in dem anderen Teil angeordnet ist, lassen sich derartige Wirbelströmungen beispielsweise durch Taylour-Couette Strömungen erzeugen.

Auch kann die Dichtgeometrie eine Dichtlippe aufweisen, die bei Stillstand der Antriebseinheit zur Abdichtung des Innenbereichs vom Außenbereich an einer Gegenfläche der mobilen Werkzeugmaschine, insbesondere der Antriebseinheit, anliegt. Somit lässt sich eine dauerhafte Abdichtung bei Stillstand der Antriebseinheit sicherstellen.

Die oder eine Dichtlippe der Dichtgeometrie kann ausgebildet sein, dass sich bei Betrieb der Antriebseinheit diese Dichtlippe von der oder einer Gegenfläche ablöst oder dass sich bei Betrieb der Antriebseinheit eine Anpresskraft dieser Dichtlippe auf diese Gegenfläche zumindest im Vergleich zum Stillstand der Antriebseinheit verringert. Die Dichtgeometrie kann eingerichtet sein, dass sich die Ablösung beziehungsweise die Verringerung der Anpresskraft erst ab einem vordefinierten, insbesondere unteren, Grenzwert, beispielsweise einer Mindestdrehgeschwindigkeit der Welle, ergibt. Die Dichtgeometrie kann insbesondere eingerichtet sein, dass die Ablösung beziehungsweise die Verringerung der Anpresskraft durch eine durch den Betrieb der Antriebseinheit entwickelte Zentrifugalkraft entsteht.

Aufgrund des hohen Wassergehaltes des Schmiermittels ist es besonders vorteilhaft, wenn die Dichtgeometrie ein wasserdampfbeständiges Material aufweist. Vorzugsweise kann die Dichtgeometrie aus wenigstens einem wasserdampfbeständigen Material ausgebildet sein. Somit kann die Dichtgeometrie einem vergleichsweise geringen Wartungsaufwand unterliegen.

Der Wartungsaufwand der Dichtgeometrie lässt sich weiter verringern, wenn die Dichtgeometrie ein hochtemperaturbeständiges Material aufweist. Vorzugsweise kann die Dichtgeometrie aus einem hochtemperaturbeständigen Material ausgebildet sein. Insbesondere kann die Dichtgeometrie ein Material aufweisen, das dauerhaft Temperaturen von mindestens 120° C, besonders bevorzugt von mindestens 150° C, widersteht. Die Dichtgeometrie kann insbesondere aus einem Material ausgebildet sein, das gegen Wasserdampf mit Temperaturen von mindestens 120°C, besonders bevorzugt von mindestens 150°C, beständig ist. Denkbar ist insbesondere, dass die Dichtgeometrie einen derart wasserdampfbeständigen und hochtemperaturbeständigen fluorhaltigen Kautschuk aufweist.

Alternativ oder ergänzend lassen sich der Wartungsaufwand weiter verringern und/oder die Lebensdauer der Dichtgeometrie steigern, wenn die Dichtgeometrie, insbesondere die Dichtlippe, eine Beschichtung aufweist. Die Beschichtung kann eine Plasmabeschichtung sein. Sie kann glasartig oder diamantartig sein.

Alternativ oder ergänzend können der Wartungsaufwand reduziert und/oder die Lebensdauer der Dichtgeometrie weiter verlängert werden, wenn die mobile Werkzeugmaschine ausgebildet ist, dass die Temperatur der Dichtgeometrie im Betrieb der Antriebseinheit unter 120°C, vorzugsweise unter 100°C, bleibt. Dazu kann die mobile Werkzeugmaschine eine Kühlvorrichtung aufweisen. Weist die Dichtgeometrie eine dynamische Dichtung auf oder ist sie als solche ausgebildet, das heißt, ist sie eingerichtet, an einem relativ zu ihr bewegten Teil, beispielsweise der Welle, abzudichten, kann die Dichtgeometrie, insbesondere ausschließlich, an wenigstens ein verhältnismäßig langsam relativ zu ihr bewegtes Teil angrenzen. Eine Drehzahl des wenigstens einen relativ zur Dichtgeometrie bewegten Teils kann weniger als 10⁴ Umdrehungen pro Minute, insbesondere weniger als 8 x 10³ Umdrehungen pro Minute, betragen. Die Drehzahl kann höchstens zwei Fünftel, bevorzugt höchstens ein Drittel, der Drehzahl einer bislang üblichen gattungsgemäßen mobilen Werkzeugmaschine, beispielsweise einer mobilen Werkzeugmaschine mit 22 x 10³ Umdrehungen pro Minute, betragen. Denkbar ist dazu beispielsweise, die Antriebseinheit von einem Gehäuse zu umschließen. Aus dem Gehäuse kann lediglich eine Welle, beispielsweise zum Antrieb einer Werkzeugaufnahme der mobilen Werkzeugmaschine, austreten. Eine derartige Welle befindet sich üblicherweise auf einer Abtriebsseite der Antriebseinheit und weist damit üblicherweise verhältnismäßig niedrige Drehzahlen auf. Die Dichtgeometrie kann dann zur Abdichtung zwischen dem Gehäuse und der Welle ausgebildet und/oder angeordnet sein.

Die Dichtgeometrie kann als mehrstufige Dichtung ausgebildet sein. Sie kann dazu wenigstens zwei Dichtlippen aufweisen.

Wenigstens eine der Dichtlippen kann einen V-förmigen Querschnitt aufweisen.

Verschleiß, insbesondere der Dichtgeometrie, kann auch verringert werden, indem die Dichtgeometrie ausgebildet ist, eine möglichst geringe Anpresskraft zu entwickeln. Weist die Dichtgeometrie beispielsweise einen Radialwellenwellendichtring auf, kann der Radialwellenwellendichtring eingerichtet sein, lediglich eine verhältnismäßig geringe Radialanpresskraft zu erzeugen. Die erzeugte Radialanpresskraft kann durch eine umfangsbezogene Radialanpresskraft quantifiziert sein. Vorzugsweise kann die umfangsbezogene Radialanpresskraft höchstens 200 N/m, besonders bevorzugt höchstens 160 N/m, betragen. Durch eine derart geringe Radialanpresskraft wird eine reibungsbedingte Temperaturerhöhung in der Dichtgeometrie reduziert oder vermieden. Trotz des vergleichsweise hohen Wassergehaltes des Schmiermittels kann dadurch eine Bildung von Wasserdampf im Bereich der Dichtgeometrie vermieden oder zumindest reduziert werden. Das Material der Dichtgeometrie kann somit einer vergleichsweise geringen Beanspruchung ausgesetzt sein. Dieser Vorteil kann besonders bedeutsam sein, wenn die Dichtgeometrie einen fluorhaltigen Kautschuk, insbesondere ein FKM, aufweist.

Zur Reduktion oder Vermeidung des Eintritts von Störstoffen in die Antriebseinheit kann eine Störstoff-Labyrinthdichtung an oder in der Antriebseinheit angeordnet sein. Vorzugsweise kann die Störstoff-Labyrinthdichtung im Außenbereich angeordnet sein und/oder an den Außenbereich angrenzen.

Wasser kann den Hauptbestandteil des Schmiermittels bilden.

Das Schmiermittel kann neben Wasser wenigstens ein Additiv, insbesondere ein Verschleißschutzadditiv, ein Korrosionsschutzadditiv und/oder ein antimikrobielles, wachstumshemmendes Additiv, enthalten. Das Schmiermittel kann auch wenigstens ein Glycol enthalten. Das Glycol oder die Glycole können, insbesondere nach Wasser, einen zweitgrößten Anteil am Schmiermittel haben.

In den Rahmen der Erfindung fällt des Weiteren eine Verwendung einer erfindungsgemäßen mobilen Werkzeugmaschine zur Bearbeitung eines natürlichen oder künstlichen Gesteins, vorzugsweise zum Abriss und/oder zur Errichtung eines Gebäudes. Bei einer solchen Verwendung der erfindungsgemäßen mobilen Werkzeugmaschine sind häufig besonders hohe Arbeitsleistungen erforderlich, sodass der Nutzen der Erfindung bei dieser Verwendung besonders ausgeprägt zum Tragen kommen kann.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

**Es zeigen:**
- **Fig. 1**: eine Handwerkzeugmaschine;
- **Fig. 2**: eine schematische Darstellung eines Ausschnitts einer Antriebseinheit der Handwerkzeugmaschine mit einer Dichtgeometrie und mit Schmiermittel.

In der nachfolgenden Beschreibung der Figuren werden zur Erleichterung des Verständnisses der Erfindung für gleiche oder sich funktional entsprechende Elemente jeweils die gleichen Bezugszeichen verwendet.

Wenngleich die Erfindung allgemein mobile Werkzeugmaschinen und somit beispielsweise Bauroboter oder Handwerkzeugmaschinen umfasst, wird allein zur Erleichterung des Verständnisses die Erfindung am Beispiel einer Handwerkzeugmaschine erläutert.

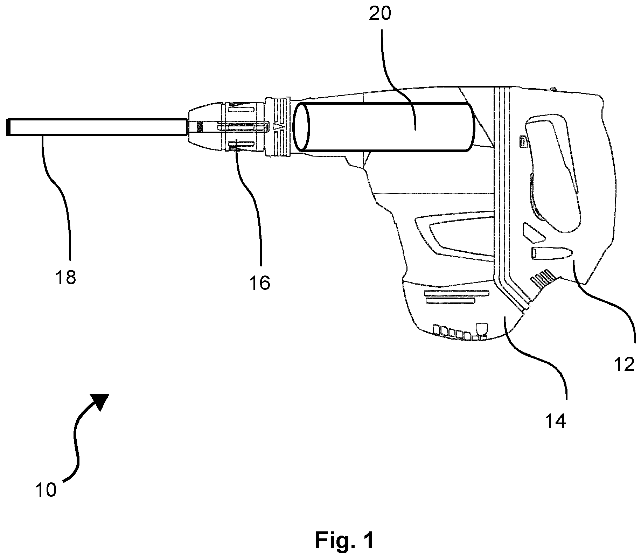

**Fig. 1** zeigt eine Handwerkzeugmaschine **10.** Die Handwerkzeugmaschine 10 ist als Bohrhammer ausgebildet. Sie ist kabellos betreibbar. Dazu weist sie im Bereich eines Gehäuses **12** einen wiederaufladbaren Akkumulator **14** auf. Der Akkumulator 14 weist Lithium auf. Die Handwerkzeugmaschine 10 ist als tragbares Gerät ausgebildet. Sie weist vorzugsweise ein Gewicht zwischen 0,5 und 15 kg und allgemein von weniger als 25 kg auf.

Die Handwerkzeugmaschine 10 weist ferner eine Werkzeugaufnahme **16** auf. In der Werkzeugaufnahme 16 ist ein Werkzeug **18** aufgenommen. Das Werkzeug 18 weist eine Diamantbohrkrone auf.

In schematisierter Darstellung ist ferner eine Antriebseinheit **20** der Handwerkzeugmaschine 10 in Fig. 1 erkennbar. Die Antriebseinheit 20 befindet sich innerhalb des Gehäuses 12 und ist nur aus Darstellungsgründen dem Gehäuse 12 überlagert dargestellt.

Die Antriebseinheit 20 treibt eine Welle an, an die wiederum die Werkzeugaufnahme 16 gekoppelt ist.

Die Antriebseinheit 20 weist ein elektropneumatisches Schlagwerk und einen Drehantrieb auf, die die Welle schlagend beziehungsweise drehend antreiben. Das Schlagwerk und der Drehantrieb sind über ein Getriebe der Antriebseinheit 20 mit einem Elektromotor der Antriebseinheit 20 mechanisch verbunden und durch diesen antreibbar.

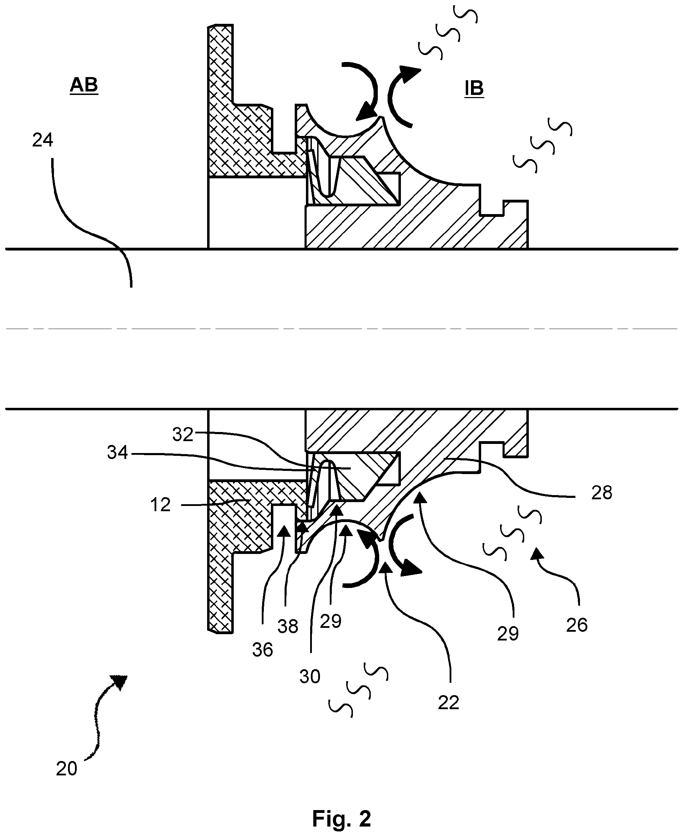

**Fig. 2** zeigt einen Ausschnitt der Antriebseinheit 20 in einer schematischen Querschnittsansicht.

Insbesondere ist eine Dichtgeometrie **22** zu erkennen, die eingerichtet ist, zwischen einer von der Antriebseinheit 20 angetriebenen Welle **24** und dem Gehäuse 12, das in Fig. 2 nicht ausschnittsweise dargestellt ist, abzudichten. Insbesondere dichtet die Dichtgeometrie 22 einen ein Schmiermittel **26** enthaltenden Innenbereich **IB** der Antriebseinheit 20 gegen einen Außenbereich **AB** ab. In Fig. 2 ist das Schmiermittel 26 in Form mehrerer Wellenlinien schematisch angedeutet. Das Schmiermittel 26 kann dabei grundsätzlich den gesamten freien und zusammenhängenden Raum innerhalb des Innenbereichs IB erreichen beziehungsweise sich innerhalb dieses Raumes ausbreiten.

Im Idealfall kann dabei das Schmiermittel 26 den Innenbereich IB nicht verlassen.

Das Schmiermittel 26 ist ein wasserhaltiges Schmiermittel. Es weist 33 Gewichtsprozent Wasser auf. Somit weist die Handwerkzeugmaschine 10 (Fig. 1) die Antriebseinheit 20 auf, wobei die Antriebseinheit 20 das wasserhaltige Schmiermittel 26 aufweist.

Wie im Folgenden noch näher erläutert wird, ist die Dichtgeometrie 22 eingerichtet und dadurch besonders geeignet, zur Abdichtung des wasserhaltigen Schmiermittels 26 verwendet zu werden.

Die Dichtgeometrie 22 ist radial um die Welle 24 umlaufend ausgebildet. Insbesondere sind die Dichtgeometrie 22 und die Welle 24 symmetrisch zur Längsachse der Welle 24 ausgebildet.

Die Dichtgeometrie 22 weist einen Dichtungsträger **28** auf. Der Dichtungsträger 28 kann aus NBR ausgebildet sein. Der Dichtungsträger 28 ist presssitzend an der Welle 24 fixiert. Alternativ oder ergänzend kann der Dichtungsträger 28 an der Welle 24 anvulkanisiert und/oder angeklebt sein.

An der dem übrigen Innenbereich IB zugewandten Seite weist der Dichtungsträger 28 wenigstens eine Wirbelstruktur **29** zur Erzeugung wenigstens einer Wirbelströmung innerhalb des Schmiermittels 26 auf. Insbesondere weist der Dichtungsträger 28 zwei Wirbelstrukturen 29 auf. Die Wirbelstrukturen 29 sind rinnenförmig ausgebildet. Ihr Querschnitt kann ellipsenförmig, insbesondere kreisförmig, oder zumindest im Wesentlichen ellipsenförmig ausgebildet sein. Das Gehäuse 12 kann eine zu wenigstens einer der Wirbelstrukturen 29 komplementär ausgebildete Wirbelstruktur aufweisen. Durch die Wirbelstrukturen 29 können sich bei Betrieb der Antriebseinheit 20 in zur Dichtgeometrie 22 strömendem Schmiermittel 26 ein oder mehrere Wirbelströmungen ausbilden. Insbesondere können sich im Bereich der Wirbelstrukturen 29 gegenläufige Wirbelströmungen ausbilden, wie sie mit Kreisbogen-Pfeilen in Fig. 2 markiert sind. Durch diese Wirbelströmungen bzw. durch die Wirbelstrukturen 29 kann die Dichtwirkung der Dichtgeometrie 22 somit weiter verbessert werden.

In einer Einbuchtung **30** des Dichtungsträgers 28 sitzt eine Dichtlippe **32.** Die Dichtlippe **32** weist einen V-förmigen Querschnitt auf. Ihr Dichtlippenflügel **34** ragt schräg, insbesondere seitlich, das heißt in einer zur Längsachse der Welle 24 parallelen Richtung, sowie in einer relativ zur Welle 24 radialen Richtung vom Dichtungsträger 28 ab.

Die Dichtlippe 32 ist aus einem Elastomer ausgebildet. Bei einem Ausführungsbeispiel der Erfindung ist dazu die Dichtlippe 32 aus NBR ausgebildet. Bei einem alternativen Ausführungsbeispiel ist die Dichtlippe 32 aus einem fluorhaltige Kautschuk, insbesondere aus einem FKM, ausgebildet. Die Dichtlippe 32, insbesondere der Dichtlippenflügel 34, kann eine Plasmabeschichtung, insbesondere zur Minderung der Reibung des Dichtlippenflügels 34 am Gehäuse 12, aufweisen.

Bei Stillstand der Antriebseinheit 20 liegt das freie Ende des Dichtlippenflügels 34 und damit die Dichtlippe 32 am Gehäuse 12 seitlich an. Das Gehäuse 12 bildet insoweit eine Gegenfläche für die Dichtlippe 32. Insbesondere presst der Dichtlippenflügel 34 mit einer, vorzugsweise geringen, Anpresskraft gegen das Gehäuse 12. Somit dichtet der Dichtlippenflügel 34 bei Stillstand der Antriebseinheit 20 den Innenbereich IB, der unter anderem durch das Gehäuse 12 und den Dichtungsträger 28 vom Außenbereich AB abgegrenzt ist, gegen den Außenbereich AB ab. Das im Innenbereich IB befindliche Schmiermittel 26 kann nicht in den Außenbereich AB austreten.

Bei Betrieb der Antriebseinheit 20 und damit bei Rotation der Welle 24 wird der Dichtlippenflügel 34 fliehkraft-bedingt radial von der Welle 24 weg gerichtet verformt. Dadurch verringert sich die Anpresskraft des Dichtlippenflügels 34, mit der dieser gegen das Gehäuse 12 presst. Überschreitet die Drehzahl der Welle 24 eine Mindestdrehgeschwindigkeit, so hebt der Dichtlippenflügel 34 vom Gehäuse 12 zumindest geringfügig ab.

Die Reibung zwischen dem Dichtlippenflügel 34 und dem Gehäuse 12 und damit die sonst lokal entstehende relative Temperaturerhöhung werden dadurch abgeschwächt oder vermieden. Eine lokale Bildung von Wasserdampf im Bereich des Dichtlippenflügels 34 kann somit ebenfalls im Umfang verringert oder sogar gänzlich vermieden werden.

Die Dichtwirkung der Dichtgeometrie 22 bleibt selbst im Falle des Abhebens des Dichtlippenflügels 34 aufgrund der entstehenden Fliehkräfte erhalten, durch die anflutendes Schmiermittel 26 aus dem Grenzbereich zwischen dem Dichtungsträger 28 und der Dichtlippe 32 und dem Gehäuse 12 herausgedrängt wird.

Zur ergänzenden Unterstützung dieses dynamischen Dichteffekts ist zwischen dem Gehäuse 12 und dem Dichtungsträger 28 eine Schmiermittel-Labyrinthdichtung **36** mit einer Engstelle **38** in Form eines schmalen Kanals ausgebildet.

Im Bereich der Schmiermittel-Labyrinthdichtung 36, insbesondere im Bereich der Engstelle 38, kann wenigstens ein Gewinde ausgebildet sein. Durch das Gewinde kann im Betrieb der Antriebseinheit 20 zusätzlich Schmiermittel 26 von der Dichtlippe 32 weggefördert werden. Dazu kann das Gewinde vorzugsweise in einer radialen Richtung verlaufend oder zumindest nicht axial zur Welle 24 verlaufend ausgebildet sein.

## Patentansprüche

1. **Mobile Werkzeugmaschine,** beispielsweise Handwerkzeugmaschine (10), mit einer Antriebseinheit (20),
**dadurch gekennzeichnet,**
**dass** die Antriebseinheit (20) ein wasserhaltiges Schmiermittel (26) aufweist und/oder dass die Antriebseinheit (20) zum Betrieb mit dem wasserhaltigen Schmiermittel (26) eingerichtet ist, wobei das wasserhaltige Schmiermittel (26) wenigstens 5 Prozent, vorzugsweise wenigstens 15 Prozent, Wasser aufweist.

2. Mobile Werkzeugmaschine nach Anspruch 1, **dadurch gekennzeichnet, dass** die mobile Werkzeugmaschine kabellos betreibbar ist.

3. Mobile Werkzeugmaschine nach einem der vorhergehenden Ansprüche, **dadurch gekennzeichnet, dass** die mobile Werkzeugmaschine eingerichtet ist, ein diamanthaltiges Werkzeug (18) anzutreiben.

4. Mobile Werkzeugmaschine nach einem der vorhergehenden Ansprüche, **dadurch gekennzeichnet, dass** ein das wasserhaltige Schmiermittel (26) enthaltender Innenbereich (IB) der Antriebseinheit (20) gegen einen Außenbereich (AB) durch wenigstens eine Dichtgeometrie (22) der mobilen Werkzeugmaschine abgedichtet ist.

5. Mobile Werkzeugmaschine nach Anspruch 4, **dadurch gekennzeichnet, dass** die Dichtgeometrie (22) ein Acryl-Nitril-Butadien aufweist.

6. Mobile Werkzeugmaschine nach einem der Ansprüche 4 oder 5, **dadurch gekennzeichnet, dass** die Dichtgeometrie (22) ein fluorhaltiges Material, insbesondere einen fluorhaltigen Kautschuk, aufweist.

7. Mobile Werkzeugmaschine nach einem der Ansprüche 4 bis 6, **dadurch gekennzeichnet, dass** die Dichtgeometrie (22) eine zumindest bei Betrieb der Antriebseinheit (20) berührungslose Dichtung aufweist.

8. Mobile Werkzeugmaschine nach einem der Ansprüche 4 bis 7, **dadurch gekennzeichnet, dass** die Dichtgeometrie (22) eingerichtet ist, zumindest bei Betrieb der Antriebseinheit ein Sperrfluid, insbesondere Sperrluft, aufzuweisen und/oder zu erzeugen.

9. Mobile Werkzeugmaschine nach einem der Ansprüche 4 bis 8, **dadurch gekennzeichnet, dass** die Dichtgeometrie (22) eingerichtet ist, bei Betrieb der Antriebseinheit (20) im Schmiermittel (26) wenigstens eine Wirbelströmung zu erzeugen.

10. Mobile Werkzeugmaschine nach einem der Ansprüche 4 bis 9, **dadurch gekennzeichnet, dass** die Dichtgeometrie (22) eine Dichtlippe (32) aufweist, die bei Stillstand der Antriebseinheit (20) zur Abdichtung des Innenbereichs (IB) vom Außenbereich (AB) an einer Gegenfläche der mobilen Werkzeugmaschine anliegt.

11. Mobile Werkzeugmaschine nach einem der Ansprüche 4 bis 10, **dadurch gekennzeichnet, dass** die oder eine Dichtlippe (32) der Dichtgeometrie (22) ausgebildet ist, dass sich bei Betrieb der Antriebseinheit (20) diese Dichtlippe (32) von der oder einer Gegenfläche ablöst oder dass sich bei Betrieb der Antriebseinheit (20) eine Anpresskraft dieser Dichtlippe (32) auf diese Gegenfläche zumindest im Vergleich zum Stillstand der Antriebseinheit (20) verringert.

12. Mobile Werkzeugmaschine nach einem der Ansprüche 4 bis 11, **dadurch gekennzeichnet, dass** die Dichtgeometrie (22) ein wasserdampfbeständiges Material aufweist.

13. Mobile Werkzeugmaschine nach einem der Ansprüche 4 bis 12, **dadurch gekennzeichnet, dass** die Dichtgeometrie (22) ein hochtemperaturbeständiges Material aufweist.

14. Mobile Werkzeugmaschine nach einem der Ansprüche 4 bis 13, **dadurch gekennzeichnet, dass** die Dichtgeometrie (22), insbesondere die Dichtlippe (32), eine Beschichtung, insbesondere eine Plasmabeschichtung, aufweist.

15. Mobile Werkzeugmaschine nach einem der Ansprüche 4 bis 14, **dadurch gekennzeichnet, dass** die mobile Werkzeugmaschine ausgebildet ist, dass die Temperatur der Dichtgeometrie (22) im Betrieb der Antriebseinheit unter 120°C, vorzugsweise unter 100°C, beträgt.
